# EUROPÄISCHE PATENTSCHRIFT

(11) **EP 1 391 640 B1**
(45) Veröffentlichungstag und Bekanntmachung des Hinweises auf die Patenterteilung: **23.02.2005**
(21) Anmeldenummer: 02018818.1
(22) Anmeldetag: 23.08.2002
(51) Int. Cl.: F16J 15/06, F16J 15/10

(54) **Dichtungsring**
Sealing ring
Bague d'étanchéité

(43) Veröffentlichungstag der Anmeldung: 25.02.2004
(73) Patentinhaber: FESTO AG & Co, 73734 Esslingen (DE)
(72) Erfinder: Schleth, Andreas, 73734 Esslingen (DE); Schulz, Winfried, 73765 Neuhausen (DE); Brenner, Hans-Walter, 70565 Stuttgart (DE)
(74) Vertreter: Reimold, Otto, Dr. Dipl.-Phys.

(56) Entgegenhaltungen:
- EP-A- 0 922 888
- DE-A- 1 806 617
- DE-A- 4 309 652
- FR-A- 2 775 045
- US-A1- 2002 030 326

## Beschreibung

Die Erfindung betrifft einen Dichtungsring, mit einem maßgeblich für die Formstabilität verantwortlichen ringförmigen Grundkörper, der an wenigstens einer Axialseite eine konzentrisch angeordnete Ringnut mit zwei sich radial gegenüberliegenden Nutflanken aufweist, in der ein aus gummielastischem Material bestehender Ringkörper gehalten ist, der einen axial über den Grundkörper vorstehenden Dichtwulst aufweist, wobei das Fassungsvermögen der Ringnut mindestens dem Volumen des Dichtkörpers entspricht, sodass die Ringnut in der Lage ist, bei Beaufschlagung und Verformung des Dichtwulstes auch das den Dichtwulst definierende Material des Dichtkörpers aufzunehmen und wobei innerhalb der Ringnut radial beidseits des Dichtungswulstes jeweils ein zur Aufnahme des verformten Materials des Dichtwulstes vorgesehener ringförmiger Freiraum vorgesehen ist.

Ein aus der EP 0 922 888 A2 bekannter Dichtungsring verfügt über einen aus thermoplastischem Kunststoffmaterial bestehenden Grundkörper, der an einer Axialseite einen zu dem Grundkörper konzentrischen Dichtkörper aus elastomerem Kunststoffmaterial trägt. Der Dichtkörper sitzt in einer Ringnut des Grundkörpers ein, und ragt mit einem Dichtwulst aus der Ringnut heraus und axial über den Grundkörper vor. Bei Gebrauch kann der Dichtungsring axial zwischen zwei relativ zueinander abzudichtenden Dichtflächen zweier Bauteile platziert werden, wobei der Dichtwulst beim gegenseitigen Festziehen der beiden Bauteile von der einen Dichtfläche beaufschlagt und verformt wird. Auf diese Weise entsteht ein abdichtender Kontakt zwischen dem betreffenden Bauteil und dem Dichtkörper.

Werden die beiden zu verbindenden Bauteile zu fest angezogen, kann der Dichtkörper auf Grund der zu starken Kompression zerstört werden. Es besteht insbesondere die Gefahr, dass der Dichtwulst ganz oder teilweise abgeschert wird. Um dieser Problematik zu begegnen, hat man in der DE 39 18 891 C2 bereits vorgeschlagen, den Dichtkörper an der radial orientierten Innenfläche eines L-förmig konturierten Grundkörpers anzuordnen. Der Grundkörper dient hier als Festanschlag zur Begrenzung der gegenseitigen Annäherung der miteinander zu verbindenden Bauteile, sodass ein Zerquetschen des Dichtkörpers verhindert wird. Der Dichtkörper selbst kann nach radial innen ausweichen, was allerdings zur Folge hat, dass der Aufbau von Gegenkräften eingeschränkt ist und folglich die für die Dichtqualität verantwortliche Pressung zwischen der Dichtfläche des Bauteils und dem Dichtkörper des Dichtungsringes nicht besonders hoch ist.

Bei einem aus der US 2002/030326 A1 bekannten Dichtungsring der eingangs genannten Art sitzt der mit einem mittigen Dichtwulst versehene Dichtkörper so in einer Ringnut des Grundkörpers, dass der Dichtwulst bei Beaufschlagung durch ein mit ihm zur Abdichtung kooperierendes Bauteil in die Ringnut hinein verdrängt werden kann, deren Fassungsvermögen so gewählt ist, dass das gesamte Volumen des inkompressiblen Dichtkörpers darin Platz findet. Dadurch wird ein Zerquetschen des Dichtkörpers verhindert. Da der Dichtwulst in die Ringnut hineingedrückt wird, die radial beidseits von Nutflanken flankiert ist, wird das Material des Dichtkörpers gleichwohl an einer völligen Bewegungsfreiheit gehindert, sodass eine für einen sicheren Dichtkontakt ausreichende Gegenkraft aufgebaut wird. Der Dichtkörper erfährt in der Ringnut des Grundkörpers eine definierte und zulässige Verformung. Beim Festziehen des abzudichtenden Bauteils lässt sich überdies durch den stark ansteigenden Widerstand beim Auftreffen des Bauteils auf den aus härterem Material bestehenden Grundkörper der Zustand erfühlen, bei dem der Dichtkörper komplett in die Ringnut zurückgedrängt wurde. Auf diese Weise kann das nachfolgende endgültige Festziehen des Bauteils mit einer kontrollierten Kraft erfolgen, die die gewünschte Festigkeit der Verbindung gewährleistet und zugleich eine Beschädigung des Dichtungsringes vermeidet. Da der Dichtungskörper bei Verwendung des Dichtungsringes nicht beschädigt wird, ist der Dichtungsring in der Regel mehrfach verwendbar.

Die DE 43 09 652 A offenbart ebenfalls einen Dichtungsring, bei dem ein Dichtkörper in einem als Ringnut gestalteten Zwischenraum angeordnet ist, der so bemessen ist, dass er das verdrängte Material des Dichtkörpers aufzunehmen vermag.

Es ist die Aufgabe der vorliegenden Erfindung, einen Dichtungsring der eingangs genannten Art zu schaffen, bei dem in Verbindung mit einer hohen Dichtqualität die Beschädigungsgefahr für den Dichtkörper weiter verringert ist.

Zur Lösung dieser Aufgabe ist vorgesehen, dass der radial innerhalb des Dichtwulstes vorgesehene innere Freiraum einen größeren Querschnitt hat als der radial außerhalb des Dichtwulstes vorgesehene äußere Freiraum.

Auf diese Weise wird das Verformungsverhalten des Dichtwulstes begünstigt, so dass dieser tendenziell stärker nach radial innen als nach radial außen umgebogen wird, wenn er durch die Dichtfläche des abzudichtenden Bauteils axial beaufschlagt wird. Dadurch wird besonders wirksam verhindert, dass der Dichtwulst nach radial außen über die Ringnut hinaus verdrängt wird und dadurch eventuell zwischen der Dichtfläche des Bauteils und dem Grundkörper zu liegen käme. Man erhält somit eine noch bessere Sicherheit gegen Beschädigungen des Dichtkörpers.

Vorteilhafte Weiterbildungen der Erfindung gehen aus den Unteransprüchen hervor.

Die Nutflanken der Ringnut sind zweckmäßigerweise derart mit einem Schrägverlauf versehen, dass sie in der Nuttiefenrichtung aufeinander zu laufen. Im Bereich der Nutöffnung hat die Ringnut vorzugsweise eine größere Breite als im Bereich des Nutgrundes.

Die Freiräume sind bevorzugt radial einerseits vom Dichtwulst und andererseits von der zugeordneten Nutflanke begrenzt. Dies lässt sich insbesondere dadurch realisieren, dass der Dichtkörper einen am Nutgrund anliegenden und sich an beiden Nutflanken abstützenden Basisabschnitt aufweist, von dem der im Vergleich zur Breite der Ringnut eine geringere Breite aufweisende Dichtwulst axial absteht.

Vorzugsweise ist der innere Freiraum tiefer ausgestaltet als der äußere Freiraum. Auch kann der innere Freiraum im Bereich der Nutöffnung breiter sein als der äußere Freiraum. Dadurch wird das Verformungsverhalten des Dichtwulstes noch weiter begünstigt.

Bevorzugt bestehen sowohl der Grundkörper als auch der mindestens eine Dichtkörper aus Kunststoffmaterial. Als Material für den Grundkörper empfiehlt sich ein thermoplastisches Kunststoffmaterial, als Material für den mindestens einen Dichtkörper ist ein elastomeres Kunststoffmaterial empfehlenswert. Bevorzugt wird der jeweilige Dichtkörper durch Spritzgießen an den Grundkörper angeformt.

Ist der Dichtungsring an beiden Axialseiten mit jeweils einem in einer entsprechend gestalteten Ringnut aufgenommenen Dichtkörper ausgestattet, können die beiden Dichtkörper getrennt voneinander am Grundkörper angeformt werden, doch besteht auch die Möglichkeit einer einheitlichen Herstellung, indem man den Grundkörper mit zwischen den beiden Ringnuten verlaufenden Verbindungskanälen versieht, durch die das elastomere Kunststoffmaterial des Dichtkörpers bei der Spritzgießfertigung hindurchtreten kann, sodass die beiden hergestellten Dichtungskörper letztlich durch Materialbrücken einstückig miteinander verbunden sind.

Im Bereich seines Innenumfanges verfügt der Dichtungsring zweckmäßigerweise über mehrere über den Umfang verteilt angeordnete Haltevorsprünge, die einstückig mit wenigstens einem Dichtkörper ausgebildet sind und die bezüglich dem Grundkörper nach radial innen ragen. Die Haltevorsprünge können bei Gebrauch eine verliersichere Fixierung des Dichtungsringes gewährleisten, wenn dieser beispielsweise auf ein Außengewinde eines Schraubteils aufgesteckt ist. Dabei können die Haltevorsprünge auch eine zentrierende Wirkung haben und Querverlagerungen des Dichtungsringes mit Bezug zu dem abzudichtenden Bauteil verhindern.

Der Dichtungsring eignet sich insbesondere zur Abdichtung zwischen zwei axial einander zugewandten Dichtflächen, die an zwei durch Verdrehen miteinander zu verbindenden fluidtechnischen Bauteilen vorgesehen sind. Eines der Bauteile kann hierbei ein Schraubteil sein, beispielsweise ein Stopfen oder eine Verschraubung, das über ein stutzenartiges, mit einem Außengewinde versehenes Gewindeteil verfügt, welches in ein Innengewinde eines anderen Bauteils, beispielsweise eines Ventils oder eines Arbeitszylinders einschraubbar ist. Der Dichtungsring wird hierbei koaxial auf das Gewindeteil aufgesteckt, wobei die gegebenenfalls vorhandenen Haltevorsprünge eine Fixierung an dem Gewindeteil gewährleisten.

Nachfolgend wird die Erfindung anhand der beiliegenden Zeichnungen näher erläutert. In dieser zeigen:
- Figur 1: eine bevorzugte Bauform des erfindungsgemäßen Dichtungsringes in einem Schnitt mit einer axial und radial verlaufenden Schnittebene gemäß Schnittlinie I-I aus Figur 2, wobei zwei fluiddicht zu verbindende Bauteile strichpunktiert schematisch angedeutet sind,
- Figur 2: den Dichtungsring aus Figur 1 in Draufsicht mit axialer Blickrichtung gemäß Pfeil II aus Figur 1,
- Figur 3: eine Teildarstellung des Dichtungsringes aus Figur 2 mit Blickrichtung gemäß Pfeil III im Bereich eines Haltevorsprunges,
- Figur 4: eine Außenansicht des Dichtungsringes aus Figur 2 mit Blickrichtung gemäß Pfeil IV im Bereich der Angussstellen für die durch Spritzgießen angeformten Dichtungskörper,
- Figur 5: in vergrößerter Teildarstellung einen Querschnitt durch den Dichtungsring aus Figur 2 gemäß Schnittlinie V-V, wobei der Ausgangszustand gezeigt ist,
- Figur 6: in einer mit der Figur 5 vergleichbaren Darstellungsweise einen Ausschnitt des Dichtungsringes in einem Zustand, bei dem ein abzudichtendes Bauteil von Hand mit geringer Kraft bis zur Anlage am Grundkörper gegen den Dichtungsring vorgespannt wurde,
- Figur 7: in einer den Figuren 5 und 6 entsprechenden Darstellungsweise einen Ausschnitt des Dichtungsringes aus Figur 2 in einem Zustand, bei dem das abzudichtende Bauteil bis zur maximal gewünschten Belastung gegen den Dichtungsring vorgespannt ist,
- Figur 8: in einer der Figur 1 entsprechenden Darstellungsweise eine alternative Bauform des Dichtungsringes ohne Abbildung der abzudichtenden Bauteile und in einem Schnitt mit einer axial und radial verlaufenden Schnittebene gemäß Schnittlinie VIII-VIII aus Figur 9, und
- Figur 9: eine Unteransicht des Dichtungsringes aus Figur 8 mit Blickrichtung gemäß Pfeil IX.

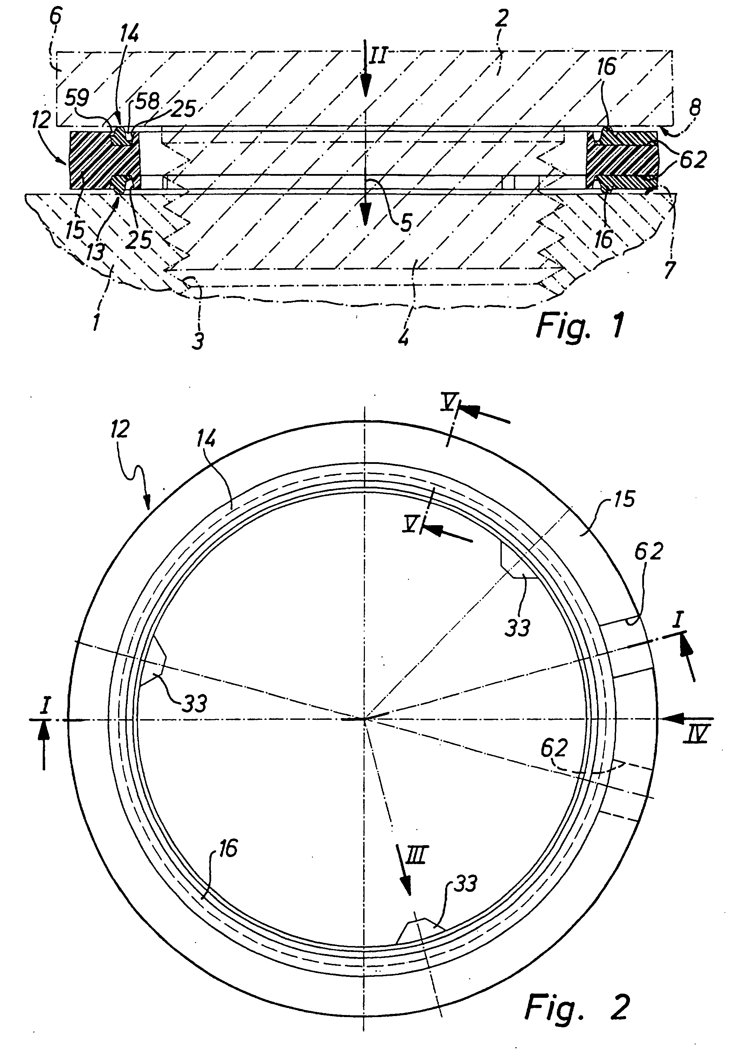

Die Figur 1 zeigt strichpunktiert in schematischer Darstellung zwei fluiddicht miteinander zu verbindende Bauteile 1, 2 in einer Schnittdarstellung. Das erste Bauteil 1 verfügt über eine kanalartige Ausnehmung 3, die mit einem Innengewinde versehen ist. Das zweite Bauteil 2 besitzt ein beispielsweise schaft- oder stutzenartig ausgebildetes Gewindeteil 4, das mit einem zum Innengewinde der Ausnehmung 3 passenden Außengewinde versehen ist. Somit lässt sich das Gewindeteil 4 in die Ausnehmung 3 einschrauben, wobei es sich in der durch einen Pfeil angedeuteten Bewegungsrichtung 5 relativ zu dem ersten Bauteil 1 verlagert.

Am einen axialen Ende des Gewindeteils 4 enthält das zweite Bauteil 2 einen das Gewindeteil 4 radial überragenden Ringvorsprung 6. Dieser kann beispielsweise von einem Betätigungsabschnitt des zweiten Bauteils 2 gebildet sein, der das Ansetzen eines Schraubwerkzeuges ermöglicht.

Im in die Ausnehmung 3 eingeschraubten Zustand des Gewindeteils 4 liegen sich zwei an den Bauteilen 1, 2 vorgesehene ringförmige Dichtflächen 7, 8 axial gegenüber. Die erste ringförmige Dichtfläche 7 befindet sich an dem ersten Bauteil 1 im Umfangsbereich der Mündung der Ausnehmung 3. Die gegenüberliegende zweite ringförmige Dichtfläche 8 befindet sich radial außerhalb des Gewindeteils 4 an der dem ersten Bauteil 1 axial zugewandten Seite des Ringvorsprunges 6.

Das zweite Bauteil 2 des Ausführungsbeispiels ist von einem Stopfen gebildet, der in die Ausnehmung 3 eingeschraubt wird, um diese fluiddicht zu verschließen. Bei dem ersten Bauteil 1 kann es sich dabei um ein Bauteil handeln, das ein Fluid enthält, beispielsweise Druckluft oder Öl. Durch den eingeschraubten Stopfen wird ein Fluidaustritt verhindert.

In einer nicht näher dargestellten anderen Ausführungsform bildet das Bauteil 2 ein Anschlussteil, das über einen durchgehenden Kanal verfügt und das mit einer weiterführenden starren oder flexiblen Fluidleitung verbunden oder verbindbar ist. Im in das erste Bauteil 1 eingeschraubten Zustand wird dabei eine fluidische Verbindung zwischen der kanalartigen Ausnehmung 3 und, durch das zweite Bauteil 2 hindurch, der daran angeordneten Fluidleitung hergestellt. Letzteres ist ein typischer Anwendungsfall auf dem Sektor der Pneumatik oder Hydraulik, wobei es sich bei dem ersten Bauteil 1 beispielsweise um ein Ventil oder um einen durch Fluidkraft zu betätigenden Antrieb handeln kann.

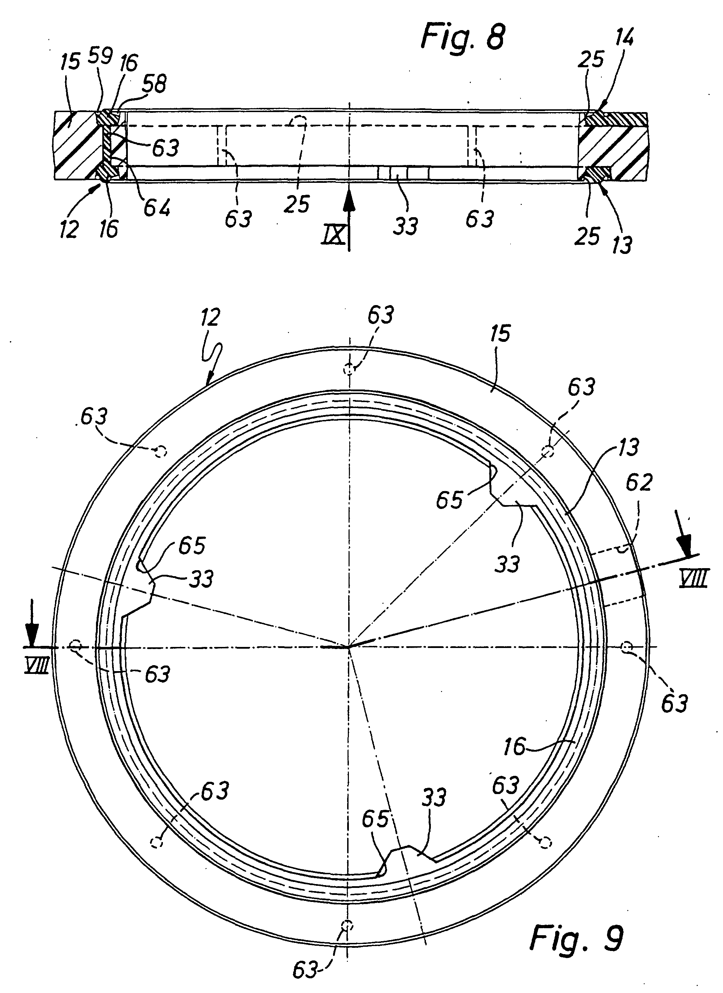

Um die beiden Bauteile 1, 2 gegeneinander abzudichten, ist der erfindungsgemäße Dichtungsring 12 vorgesehen. Die Figuren 1 bis 7 einerseits sowie Figuren 8 und 9 andererseits zeigen zwei bevorzugte Ausführungsbeispiele dieses Dichtungsringes 12. Im montierten Zustand kommt der Dichtungsring 12, wie dies in Figur 1 gezeigt ist, koaxial zwischen den beiden einander zugewandten Dichtflächen 7, 8 der beiden gegeneinander abzudichtenden Bauteile 1, 2 zu liegen. Das Gewindeteil 4 ist dabei durch den Dichtungsring 12 hindurch gesteckt.

An jeder seiner beiden in einander entgegengesetzte Axialrichtungen weisenden Axialseiten verfügt der Dichtungsring 12 über einen ringförmigen Dichtabschnitt 13, 14. In der aus Figur 1 hervorgehenden Gebrauchsposition ist der erste Dichtabschnitt 13 der ersten Dichtfläche 7 und der zweite Dichtabschnitt 14 der zweiten Dichtfläche 8 zugewandt. Um die dichte Verbindung herzustellen, wird das zweite Bauteil 2 anschließend mit einem ausreichenden Drehmoment in die Ausnehmung 3 eingeschraubt, sodass die vorerwähnten Dichtabschnitte 13, 14 von den ringförmigen Dichtflächen 7, 8 mit einer axial gerichteten Anpresskraft beaufschlagt werden. Diese Anpresskraft bewirkt einen Dichteffekt, der wie gewünscht einen Fluidaustritt zwischen den beiden Bauteilen 1, 2 hindurch verhindert.

Bevorzugt setzt sich der Dichtungsring 12 aus mehreren im Rahmen eines Spritzgießverfahrens zu einer integralen Baueinheit aneinander angeformten Körpern zusammen. Diese Körper sind beim Ausführungsbeispiel ein ringförmiger Grundkörper 15 und zwei ebenfalls ringförmige Dichtkörper 16. Die Körper sind, wie aus Figuren 2 und 9 hervorgeht, konzentrisch zueinander angeordnet.

An jeder Axialseite des Grundkörpers 15 befindet sich einer der Dichtkörper 16. Jeder Dichtkörper 16 ist in einer Ringnut 25 fixiert, die an der betreffenden Axialseite in konzentrischer Ausrichtung in den Grundkörper 15 eingelassen ist. Bevorzugt haben die beiden Ringnuten den gleichen Durchmesser und die gleiche Querschnittskontur.

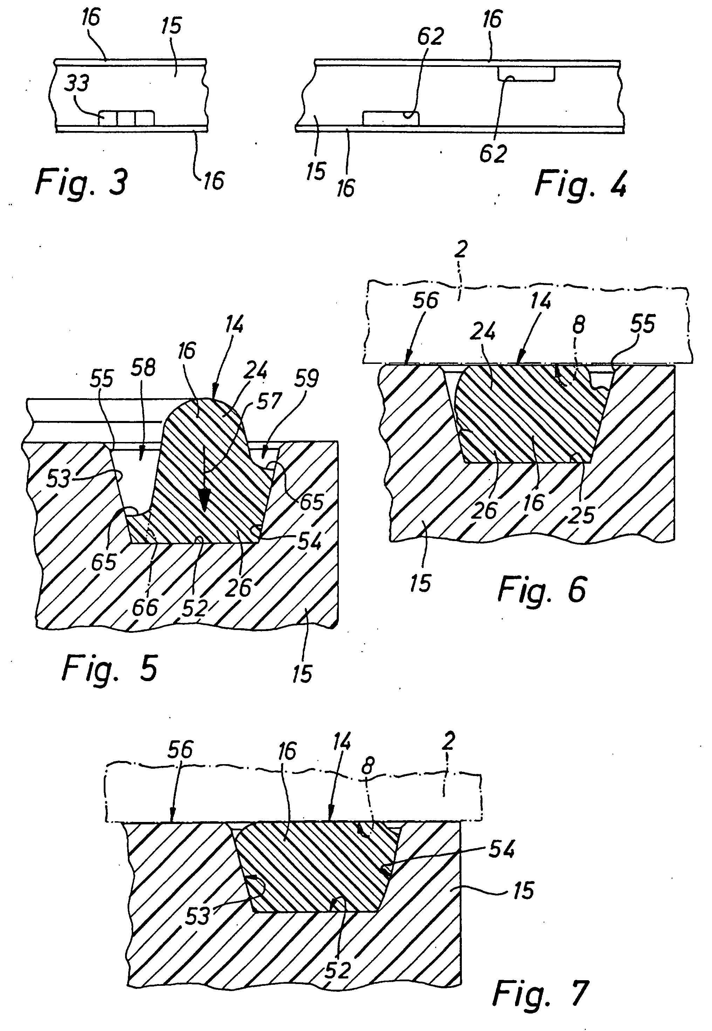

Wie aus Figuren 5 bis 7 gut hervorgeht, verfügt jede Ringnut über einen axial orientierten Nutgrund 52 und über zwei sich radial gegenüberliegende innere und äußere Nutflanken 53, 54. Der Dichtkörper 16 sitzt mit einem Fußabschnitt 26 in der zugeordneten Ringnut 25 ein und ragt - im Ausgangszustand gemäß Figuren 1, 8 und 5 gesehen - mit einem Dichtwulst 24 durch die Nutöffnung 55 hindurch axial aus der Ringnut 25 hinaus und steht somit axial über den Grundkörper 16 vor.

Zweckmäßigerweise liegt der Fußabschnitt 26 des Dichtkörpers 16 am Nutgrund 52 an und stützt sich gleichzeitig an beiden Nutflanken 53, 54 ab. Der Dichtwulst 24 verfügt insbesondere über eine geringere Breite als der Fußabschnitt 26 und die Breite der Ringnut 25, sodass sein innerhalb der Ringnut 25 liegender Abschnitt zu den beiden Nutflanken 53, 54 beabstandet ist.

Der Grundkörper 15 ist maßgeblich für die Formstabilität des Dichtungsringes verantwortlich. Er besteht zweckmäßigerweise aus einem thermoplastischen Kunststoffmaterial. Für die Abdichtung zuständig sind die beiden Dichtkörper 16, die jeweils zweckmäßigerweise aus einem elastomeren Kunststoffmaterial bestehen. Die Herstellung des Dichtungsringes 12 kann insbesondere im Rahmen eines Zweikomponenten-Spritzgießverfahrens geschehen. Dabei wird bevorzugt zunächst der aus härterem Kunststoffmaterial bestehende Grundkörper 15 gespritzt, wonach gleichzeitig oder aufeinanderfolgend die beiden Dichtkörper 16 durch Aufbringen des entsprechenden Kunststoffmaterials angespritzt werden.

Zwar wäre es möglich, den Dichtungsring 12 so auszubilden, dass er an nur einer Axialseite über einen gummielastische Eigenschaften aufweisenden Dichtkörper 16 verfügt. Die Abdichtung auf der anderen Axialseite könnte dann durch andere Maßnahmen realisiert werden, beispielsweise einen oder mehrere ringförmige Vorsprünge am Grundkörper 15. Bevorzugt werden aber die an beiden Axialseiten mit einem Dichtkörper ausgestatteten Ausführungsformen.

Die Ringnuten 25 sind so ausgebildet, dass ihr Fassungsvermögen mindestens dem Volumen des zugeordneten Dichtkörpers 16, entspricht. Bevorzugt wird eine Bauform, bei der das Fassungsvermögen der Ringnut 25 gleich oder nur geringfügig größer ist als das Volumen des zugehörigen Dichtkörpers 16 wie dies bei den Ausführungsbeispielen der Fall ist.

Durch diese aufeinander abgestimmte Gestaltung wird erreicht, dass die Ringnut 25 in der Lage ist, bei Beaufschlagung und Verformung des Dichtwulstes 24 des zugeordneten Dichtkörpers 16 auch das den Dichtwulst 24 definierende Material des Dichtkörpers 16 aufzunehmen. Verdeutlicht wird dies durch die Figuren 6 und 7, die einen Ausschnitt des Dichtkörpers 16 bei unterschiedlichen Belastungszuständen zeigen.

Wird der Dichtungsring 12 in die Gebrauchsposition zwischen den beiden Bauteilen 1, 2 gebracht, nimmt der Dichtkörper 16 zunächst noch den in Figur 5 gezeigten Ausgangszustand ein, bei dem er mit dem Dichtwulst 24 über den Grundkörper 15 vorsteht. Wird nun das zweite Bauteil 2, beispielsweise durch einen Schraubvorgang, in der Bewegungsrichtung 5 gegen den Grundkörper 15 verlagert, drückt es mit der an ihm vorgesehenen zweiten Dichtfläche 8 auf den Dichtwulst 24 und verformt diesen in die ausreichend großvolumig bemessene Ringnut 25 hinein. Die Figur 6 zeigt dabei einen Zustand bei dem das zweite Bauteil 2 manuell so weit eingeschraubt ist, bis es mit seiner zweiten Dichtfläche 8 an der sich an die Nutöffnung 55 anschließenden Stirnfläche 56 des Grundkörpers 15 zur Anlage gelangt. Bereits in diesem Zwischenzustand ist der Dichtkörper 16 zur Gänze in die Ringnut 25 hineinverformt.

Um den Endzustand zu erzielen, wird das zweite Bauteil 2 anschließend mit dem gewünschten Drehmoment festgezogen. Dabei wird der Grundköper 15 geringfügig verformt und auch der Dichtkörper 16 erfährt eine nochmalige Beaufschlagung, sodass er nun zumindest annähernd das Volumen der Ringnut 25 ausfüllt. Der ursprünglich noch konvex gekrümmte zweite Dichtabschnitt 14 ist dabei abgeflacht und verläuft bündig zu der benachbarten Stirnfläche 56, wobei er großflächig an der Dichtfläche 8 des zweiten Bauteils 2 anliegt.

Da das Material des Dichtkörpers 16 zwar vollständig in der Ringnut 25 aufgenommen ist, gleichwohl aber vom Nutgrund 52 und von den beiden Nutflanken 53, 54 abgestützt wird, kann der Dichtkörper 16 eine Gegenkraft aufbauen, mit der sein zweiter Dichtabschnitt 14 relativ stark an die zweite Dichtfläche 8 angedrückt wird. Dadurch wird ein kräftiger Dichtkontakt und mithin eine hohe Dichtqualität gewährleistet.

Die Figuren 5 bis 7 zeigen nur einen der Dichtkörper 16 des Dichtungsringes 12. Die Verhältnisse an dem nicht dargestellten anderen Dichtkörper 16 und den mit diesem zusammenwirkenden ersten Bauteil 1 sind entsprechend und laufen synchron ab.

Die Nutflanken 53, 54 besitzen zweckmäßigerweise einen Schrägverlauf, wobei sie in der durch Pfeil 57 angedeuteten Nuttiefenrichtung aufeinander zu laufen. Die Ringnut 25 hat im Bereich der Nutöffnung 54 eine größere Breite als im Bereich des Nutgrundes 52.

Um dem Dichtwulst 24 den gewünschten Verformungsraum zur Verfügung zu stellen, ist innerhalb einer jeweiligen Ringnut 25 radial beidseits des Dichtwulstes 24 jeweils ein ringförmiger Freiraum 58, 59 vorgesehen. Die Freiräume 58, 59 nehmen das verformte Material des Dichtwulstes 24 auf.

Die Freiräume könnten prinzipiell von nutartigen Vertiefungen des Dichtkörpers 16 selbst gebildet sein, sodass sie sowohl radial außen als auch radial innen vom Material des Dichtkörpers begrenzt werden. Als vorteilhafter hat sich allerdings die bei den Ausführungsbeispielen realisierte Bauform erwiesen, bei der die Freiräume 58, 59 zwar einerseits vom Dichtwulst 24 und somit vom Material des Dichtkörpers 16 begrenzt werden, andererseits jedoch von der zugeordneten inneren bzw. äußeren Nutflanke 53, 54. Dies ist in Figur 5 besonders gut zu erkennen.

Die beiden konzentrisch zueinander angeordneten Freiräume 58, 59 sind zweckmäßigerweise so ausgebildet, dass der radial innerhalb des Dichtwulstes 24 vorgesehene innere Freiraum 58 einen größeren Querschnitt hat als der radial außerhalb des Dichtwulstes 24 vorgesehene äußere Freiraum 59. Die damit verbundene Querschnittgestalt des Dichtkörpers 16 bewirkt, dass der Dichtwulst 24 bei axialer Beaufschlagung durch die zugewandte Dichtfläche 7, 8 bevorzugt in der Richtung zu dem inneren Freiraum 58 größeren Querschnittes umgebogen wird. Da bei miteinander verschraubten Bauteilen 1, 2 der Dichtwulst 24 tendenziell eher nach außen verdrängt wird, wird somit diesem Verdrängungsvorgang entgegengewirkt und wirksam verhindert, dass der Dichtwulst 24 vor die Stirnfläche 56 verdrängt wird. Somit kann der Dichtwulst 24 nicht zwischen der Stirnfläche 56 und der zugewandten Dichtfläche 8 eingeklemmt werden.

Bei der Ausführungsform der Figuren 1 bis 7 ist der innere Freiraum 58 tiefer ausgebildet als der äußere Freiraum 59. Gleichzeitig ist der innere Freiraum 58 breiter als der äußere Freiraum 59. Letzteres gilt auch für den Dichtungsring 12 gemäß Figuren 8 und 9, bei dem allerdings die beiden Freiräume 58, 59 etwa die gleiche Tiefe aufweisen.

Die Ringnut 25 und der darin fixierte Dichtkörper 16 haben jeweils über ihre gesamte Länge hinweg einen konstanten Querschnitt. Die Querschnittsfläche der Ringnut 25 ist mindestens so groß wie die Querschnittfläche des Dichtkörpers 16 im Ausgangszustand, ist vorzugsweise jedoch, zumindest geringfügig, größer als der Querschnitt des Dichtkörpers 16.

Bei allen Ausführungsbeispielen sind die Dichtköper 16 durch gegenseitiges Anspritzen im Rahmen eines Spritzgießverfahrens fest miteinander verbunden.

Bei dem Ausführungsbeispiel der Figuren 1 bis 7 sind die beiden Dichtkörper 16 getrennt voneinander ausgebildet. Sie sind unabhängig voneinander an den Grundkörper 15 angeformt. An lokaler Stelle seines Umfanges verfügt der Grundkörper 15 an jeder Axialseite über eine Aussparung 62, die die Angussstellen für den Spritzgießprozess darstellen und die im fertigestellten Zustand des Dichtungsringes 12 mit dem Material des Dichtkörpers 16 ausgefüllt sind.

Auch bei dem Dichtungsring gemäß Figuren 8 und 9 können die beiden Dichtkörper 16 durch entsprechende Angussstellen unabhängig voneinander hergestellt werden. In der Regel wird jedoch eine einzige Angussstelle 62 ausreichend sein, weil andere Maßnahmen getroffen sind, die dem Kunststoffmaterial einen Übertritt zwischen den beiden Axialseiten des Grundköpers 15 ermöglichen. Diese Maßnahmen bestehen in einer Mehrzahl von Verbindungskanälen 63, die den Grundkörper 15 in axialer Richtung durchsetzen und die beiden Ringnuten 25 miteinander verbinden. Sie münden zweckmäßigerweise jeweils am Nutgrund 52 der betreffenden Ringnut 25 ein. Die Verbindungskanäle 63 sind, vorzugsweise gleichmäßig, über die Umfangslänge des Grundkörpers 15 verteilt.

Beim Spritzgießen wird das den Dichtkörper 16 definierte Kunststoffmaterial über die Aussparung 62, die in die eine Ringnut 25 einmündet, eingespeist. Das Material füllt die Ringnut 25 und tritt gleichzeitig durch die Verbindungskanäle 63 zur anderen Ringnut 25 über, die folglich ebenfalls, entsprechend der gewünschten Form, ausgegossen wird. Im fertiggestellten Zustand sind somit die beiden Dichtungskörper 16 mittels die Verbindungskanäle 63 durchsetzenden Materialbrücken 64 des Kunststoffmaterials einstückig miteinander verbunden.

Durch die Materialbrücken 64 wird zudem eine noch bessere Fixierung der Dichtkörper 16 am Grundkörper 15 erreicht. Durch die Materialbrücken 64 wird der jeweils eine Dichtkörper 16 vom gegenüberliegenden Dichtkörper 16 in der Ringnut gehalten.

Vorzugsweise verfügen die Dichtungsringe 12 im Bereich ihres Innenumfanges über mehrere, über den Umfang verteilt angeordnete Haltevorsprünge 33, die dazu dienen, den Dichtungsring 12 im auf das Gewindeteil 4 oder ein vergleichbares Bauteil aufgebrachten Zustand verliersicher zu halten. Zusätzlich oder alternativ können die Haltevorsprünge 33 auch dazu dienen, die Aufrechterhaltung einer gewünschten konzentrischen Relativlage zwischen dem Dichtungsring 12 einerseits und den Dichtflächen 7, 8 der Bauteile 1, 2 andererseits zu gewährleisten. Die Haltevorsprünge 33 dienen dann also zur Zentrierung.

Die Haltevorsprünge 33 sind einstückig mit jeweils einem Dichtkörper 16 ausgebildet und ragen über den Grundköper 15 nach radial innen vor. Verfügt der Dichtungsring 12 wie bei den Ausführungsbeispielen über zwei Dichtkörper 16 ist es ausreichend, wenn die Haltevorsprünge 33 an lediglich einem Dichtkörper 16 vorgesehen sind. Sie können bei der Spritzgießformung des betreffenden Dichtkörpers gleichzeitig angespritzt werden.

Im Bereich der Haltevorsprünge 33 verfügt der Dichtköper 16 an der entsprechenden Axialseite über Aussparungen 65, die den radialen Durchtritt der Haltevorsprünge 33 von der Ringnut 25 zum Innenraum des Dichtungsringes 12 gestatten, ohne dass das Material über die Stirnfläche 56 des Grundkörpers 15 hinaustritt.

Da die Haltevorsprünge 33 aus gummielastischem Material bestehen, behindern sie die Montage des Dichtungsringes 12 auf dem Gewindeteil nicht. Der Dichtungsring 12 kann unter vorübergehender elastischer Verformung der Haltevorsprünge 33 problemlos koaxial aufgesteckt werden, ein Schraubvorgang ist nicht erforderlich.

Die Verteilung der Haltevorsprünge 33 entlang der Umfangslänge des Dichtungsringes 12 ist zweckmäßigerweise gleichmäßig, wobei im Falle der Ausführungsbeispiele jeweils drei Haltevorsprünge 33 vorhanden sind.

Bei allen Ausführungsbeispielen reichen die beiden Freiräume 58, 59 nicht bis zum Nutgrund 52 der Ringnut 25. Die Grundfläche 65 der Freiräume wird von dem die gesamte Ringnutbreite einnehmenden Fußabschnitt 26 definiert. Wie in Figur 5 strichpunktiert bei 66 angedeutet ist, besteht jedoch die vorteilhafte Möglichkeit, zumindest den inneren Freiraum 58 so auszubilden, dass er sich über die gesamte Nuttiefe der Ringnut 25 erstreckt. Im Ausgangszustand liegt somit keine Berührung zwischen dem Dichtkörper 16 und der inneren Nutflanke 53 vor.

Bei allen Ausführungsbeispielen sind die Freiräume 58, 59 vorzugsweise so bemessen, dass das Material des Dichtkörpers 16 bei vollständig in der Ringnut 25 aufgenommenen Dichtkörper 16 sowohl am Nutgrund 52 als auch an den beiden radialen Nutflanken 53, 54 anliegt und folglich abgestützt wird.

Die einzelnen Merkmale der beschriebenen Ausführungsbeispiele können beliebig kombiniert oder untereinander ausgetauscht werden.

## Patentansprüche

1. Dichtungsring, mit einem maßgeblich für die Formstabilität verantwortlichen ringförmigen Grundkörper (15), der an wenigstens einer Axialseite eine konzentrisch angeordnete Ringnut (25) mit zwei sich radial gegenüberliegenden Nutflanken (53, 54) aufweist, in der ein aus gummielastischem Material bestehender Dichtkörper (16) gehalten ist, der einen axial über den Grundkörper (15) vorstehenden Dichtwulst aufweist, wobei das Fassungsvermögen der Ringnut (25) mindestens dem Volumen des Dichtkörpers (16) entspricht, sodass die Ringnut (25) in der Lage ist, bei Beaufschlagung und Verformung des Dichtwulstes (24) auch das den Dichtwulst (24) definierende Material des Dichtkörpers (16) aufzunehmen und wobei innerhalb der Ringnut radial beidseits des Dichtwulstes (24) ein zur Aufnahme des verformten Materials des Dichtwulstes (24) vorgesehener ringförmiger Freiraum (58, 59) vorgesehen ist, **dadurch gekennzeichnet, dass** der radial innerhalb des Dichtwulstes (24) vorgesehene innere Freiraum (58) einen größeren Querschnitt hat als der radial außerhalb des Dichtwulstes (24) vorgesehene äußere Freiraum (59).

2. Dichtungsring nach Anspruch 1, **dadurch gekennzeichnet, dass** die Nutflanken (53, 54) der Ringnut (25) in der Nuttiefenrichtung (57) aufeinander zu laufen.

3. Dichtungsring nach Anspruch 1 oder 2, **dadurch gekennzeichnet, dass** die Ringnut (25) im Bereich der Nutöffnung (55) eine größere Breite hat als im Bereich des Nutgrundes (52).

4. Dichtungsring nach einem der Ansprüche 1 bis 3, **dadurch gekennzeichnet, dass** jeder Freiraum (58, 59) radial einerseits vom Dichtwulst (24) und andererseits von der zugeordneten Nutflanke (54, 55) begrenzt ist.

5. Dichtungsring nach einem der Ansprüche 1 bis 4, **dadurch gekennzeichnet, dass** der innere Freiraum (58) tiefer ist als der äußere Freiraum (59).

6. Dichtungsring nach einem der Ansprüche 1 bis 5, **dadurch gekennzeichnet, dass** der innere Freiraum (58) zumindest im Bereich der Nutöffnung (55) breiter ist als der äußere Freiraum (59).

7. Dichtungsring nach einem der Ansprüche 1 bis 6, **dadurch gekennzeichnet, dass** das Fassungsvermögen der Ringnut (25) gleich oder geringfügig größer ist als das Volumen des Dichtkörpers (16).

8. Dichtungsring nach einem der Ansprüche 1 bis 7, **dadurch gekennzeichnet, dass** der Dichtkörper (16) einen am Nutgrund (52) anliegenden und sich an beiden Nutflanken (53, 54) abstützenden Fußabschnitt (26) aufweist, von dem der im Vergleich zur Breite der Ringnut (25) eine geringere Breite aufweisende Dichtwulst (24) absteht.

9. Dichtungsring nach einem der Ansprüche 1 bis 8, **dadurch gekennzeichnet, dass** sowohl der Grundkörper (15) als auch der mindestens eine Dichtkörper (16) aus Kunststoff bestehen.

10. Dichtungsring nach Anspruch 9, **dadurch gekennzeichnet, dass** der mindestens eine Dichtkörper (16) durch Spritzgießen an den Grundkörper (15) angeformt ist.

11. Dichtungsring nach einem der Ansprüche 1 bis 10, **dadurch gekennzeichnet, dass** der Grundkörper (15) aus einem thermoplastischen Kunststoffmaterial besteht.

12. Dichtungsring nach einem der Ansprüche 1 bis 11, **dadurch gekennzeichnet, dass** der mindestens eine Dichtkörper (16) aus einem elastomeren Kunststoffmaterial besteht.

13. Dichtungsring nach einem der Ansprüche 1 bis 12, **dadurch gekennzeichnet, dass** im Bereich seines Innenumfanges mehrere über den Umfang verteilt angeordnete Haltevorsprünge (33) vorgesehen sind, die einstückig mit wenigstens einem Dichtkörper (16) ausgebildet sind und bezüglich dem Grundkörper (15) nach radial innen ragen.

14. Dichtungsring nach einem der Ansprüche 1 bis 13, **dadurch gekennzeichnet, dass** an beiden Axialseiten des Grundkörpers (15) ein in einer entsprechend gestalteten Ringnut (25) angeordneter Dichtkörper (16) vorgesehen ist.

15. Dichtungsring nach Anspruch 14, **dadurch gekennzeichnet, dass** die beiden Dichtkörper (16) getrennt voneinander ausgebildet sind.

16. Dichtungsring nach Anspruch 15, **dadurch gekennzeichnet, dass** die beiden Dichtkörper (16) durch Materialbrücken (64) einstückig miteinander verbunden sind, die den Grundkörper (15) an über seinen Umfang verteilten Stellen axial durchsetzen.

## Claims

1. Seal ring with an annular framework (15) essentially responsible for dimensional stability and having on one or more axial sides a concentrically arranged annular slot (25) with two radially opposite slot sides (53, 54) in which is held a seal body (16) made of rubber-elastic material with a sealing flange extending axially over the framework (15), wherein the capacity of the annular slot (25) corresponds at least to the volume of the seal body (16), so that the annular slot (25) is able, under pressure-loading and deformation of the sealing flange (24), to accommodate the material of the seal body (16) defining the sealing flange (24) as well, and wherein there is provided within the annular slot radially either side of the sealing flange (24) an annular free space (58, 59) to accommodate the deformed material of the sealing flange (24), **characterised in that** the inner free space (58) provided radially within the sealing flange (24) has a greater cross-section than the outer free space (59) provided radially outside the sealing flange (24).

2. Seal ring according to claim 1, **characterised in that** the slot sides (53, 54) of the annular slot (25) taper towards one another in the direction (57) of the slot base.

3. Seal ring according to claim 1 or 2, **characterised in that** the annular slot (25) has a greater width in the area of the slot opening (55) than in the area of the slot base (52).

4. Seal ring according to any of claims 1 to 3, **characterised in that** each free space (58, 59) is bounded radially on one side by the sealing flange (24) and on the other side by the assigned slot side (54, 55).

5. Seal ring according to any of claims 1 to 4, **characterised in that** the inner free space (58) is deeper than the outer free space (59).

6. Seal ring according to any of claims 1 to 5, **characterised in that** the inner free space (58) is wider than the outer free space (59) at least in the area of the slot opening (55).

7. Seal ring according to any of claims 1 to 6, **characterised in that** the capacity of the annular slot (25) is equal to or slightly greater than the volume of the seal body (16).

8. Seal ring according to any of claims 1 to 7, **characterised in that** the seal body (16) has a base section (26) fitting up against the slot base (52) and resting on both slot sides (53, 54), from which extends the sealing flange (24), the width of which is less than that of the annular slot (25).

9. Seal ring according to any of claims 1 to 8, **characterised in that** both the framework (15) and also the seal body or bodies (16) are made of plastic.

10. Seal ring according to claim 9, **characterised in that** the seal body or bodies (16) are made integral with the framework (15) by injection moulding.

11. Seal ring according to any of claims 1 to 10, **characterised in that** the framework (15) is made of a thermoplastic material.

12. Seal ring according to any of claims 1 to 11, **characterised in that** the seal body or bodies (16) are made of an elastomer plastic material.

13. Seal ring according to any of claims 1 to 12, **characterised in that** there are provided in the area of its inner periphery several retaining projections (33) distributed over the periphery, made in one piece with one or more seal body/bodies (16), and extending radially inwards relative to the framework (15).

14. Seal ring according to any of claims 1 to 13, **characterised in that** there is provided on both axial sides of the framework (15) a seal body (16) located in a suitably shaped annular slot (25).

15. Seal ring according to claim 14, **characterised in that** the two seal bodies (16) are made separate from one another.

16. Seal ring according to claim 15, **characterised in that** the two seal bodies (16) are joined together in one piece by material bridges (64) passing axially through the framework (15) at points distributed over its periphery.

## Revendications

1. Bague d'étanchéité, comprenant un corps de base (15) annulaire responsable en grande partie de l'indéformabilité, lequel corps comprend une rainure annulaire (25), disposée de manière concentrique sur au moins un côté axial, comprenant deux flancs de rainure (53, 54) opposés dans le sens radial, dans laquelle est retenu un corps d'étanchéité (16) constitué d'un matériau élastique à la façon de gomme, lequel corps comprend un bourrelet d'étanchéité dépassant dans le sens axial du corps de base (15), la capacité de la rainure annulaire (25) correspondant au moins au volume du corps d'étanchéité (16), de sorte que la rainure annulaire (25) soit en mesure de loger également le matériau du corps d'étanchéité (16) définissant le bourrelet d'étanchéité (24), lorsque le bourrelet d'étanchéité (24) est sollicité et déformé, un espace libre (58, 59) annulaire étant prévu pour recevoir le matériau déformé du bourrelet d'étanchéité (24) à l'intérieur de la rainure annulaire dans le sens radial des deux côtés du bourrelet d'étanchéité (24), **caractérisée en ce que** l'espace libre intérieur (58) prévu dans le sens radial à l'intérieur du bourrelet d'étanchéité (24) présente une section transversale plus grande que l'espace libre extérieur (59) prévu dans le sens radial à l'extérieur du bourrelet d'étanchéité (24).

2. Bague d'étanchéité selon la revendication 1, **caractérisée en ce que** les flancs de rainure (53, 54) de la rainure annulaire (25) convergent dans le sens de la profondeur de rainure (57).

3. Bague d'étanchéité selon la revendication 1 ou 2, **caractérisée en ce que** la rainure annulaire (25) présente dans la zone de l'ouverture de la rainure (55) une largeur plus grande que dans la zone du fond de la rainure (52).

4. Bague d'étanchéité selon l'une des revendications 1 à 3, **caractérisée en ce que** chaque espace libre (58, 59) est délimité dans le sens radial d'une part par le bourrelet d'étanchéité (24) et d'autre part par le flanc de rainure associé (54, 55).

5. Bague d'étanchéité selon l'une des revendications 1 à 4, **caractérisée en ce que** l'espace libre intérieur (58) est plus profond que l'espace libre extérieur (59).

6. Bague d'étanchéité selon l'une des revendications 1 à 5, **caractérisée en ce que** l'espace libre intérieur (58) est plus large au moins dans la zone de l'ouverture de rainure (55) que l'espace libre extérieur (59).

7. Bague d'étanchéité selon l'une des revendications 1 à 6, **caractérisée en ce que** la capacité de la rainure annulaire (25) est égale ou légèrement supérieure au volume du corps d'étanchéité (16).

8. Bague d'étanchéité selon l'une des revendications 1 à 7, **caractérisée en ce que** le corps d'étanchéité (16) comprend un tronçon de pied (26) reposant sur le fond de rainure (52) et s'appuyant sur les deux flancs de rainure (53, 54), tronçon dont s'écarte le bourrelet d'étanchéité (24) possédant une largeur plus réduite en comparaison de la largeur de la rainure annulaire (25).

9. Bague d'étanchéité selon l'une des revendications 1 à 8, **caractérisée en ce qu'**aussi bien le corps de base (15) que le au moins un corps d'étanchéité (16), sont constitués de matière plastique.

10. Bague d'étanchéité selon la revendication 9, **caractérisée en ce que** le au moins un corps d'étanchéité (16) est formé sur le corps de base (15) par moulage par injection.

11. Bague d'étanchéité selon l'une des revendications 1 à 10, **caractérisée en ce que** le corps de base (15) est constitué d'une matière thermoplastique.

12. Bague d'étanchéité selon l'une des revendications 1 à 11, **caractérisée en ce que** le au moins un corps d'étanchéité (16) est constitué d'une matière thermoplastique élastomère.

13. Bague d'étanchéité selon l'une des revendications 1 à 12, **caractérisée en ce que** plusieurs saillies de retenue (33) disposées en étant réparties sur la périphérie sont prévues dans la zone de sa périphérie intérieure, lesquelles saillies sont conçues en une seule pièce avec au moins un corps d'étanchéité (16) et dépassent vers l'intérieur dans le sens radial par rapport au corps de base (15).

14. Bague d'étanchéité selon l'une des revendications 1 à 13, **caractérisée en ce que**, sur chacune des faces axiales du corps de base (15) est prévu un corps d'étanchéité (16) disposé dans une rainure annulaire (25) configurée de manière correspondante.

15. Bague d'étanchéité selon la revendication 14, **caractérisée en ce que** les deux corps d'étanchéité (16) sont conçus en étant séparés l'un de l'autre.

16. Bague d'étanchéité selon la revendication 15, **caractérisée en ce que** les deux corps d'étanchéité (16) sont reliés l'un à l'autre en une seule pièce par des ponts de matière (64), qui traversent dans le sens axial le corps de base (15) en des points répartis sur sa périphérie.
